# EUROPÄISCHE PATENTSCHRIFT

(11) **EP 1 518 283 B1**
(45) Veröffentlichungstag und Bekanntmachung des Hinweises auf die Patenterteilung: **27.12.2006**
(21) Anmeldenummer: 02722114.2
(22) Anmeldetag: 21.02.2002
(51) Int. Cl.: H01M 2/06, H01M 2/30, H01R 11/28

(54) **ANSCHLUSSPOL FÜR EINEN AKKUMULATOR**
CONNECTING POLE FOR AN ACCUMULATOR
POLE DE RACCORDEMENT D'UN ACCUMULATEUR

(30) Priorität: 22.02.2001 DE 10108649
(43) Veröffentlichungstag der Anmeldung: 30.03.2005
(73) Patentinhaber: DIONYS HOFMANN GmbH, 72461 Albstadt 3 (Onstmettingen) (DE)
(72) Erfinder: HELLER, Karl-Heinz, 72406 Bisingen (DE); SEEH, Günter, 78579 Neuhausen ob Eck (DE); SIEBER, Friedhelm, 72461 Albstadt (DE)
(74) Vertreter: Nöth, Heinz
(86) Internationale Anmeldenummer: PCT/EP2002/001848
(87) Internationale Veröffentlichungsnummer: WO 2002/075828

(56) Entgegenhaltungen:
- DE-A- 3 514 662
- DE-A- 10 003 915
- DE-C- 4 241 393
- DE-C- 19 936 797
- DE-U1- 8 912 155
- GB-A- 1 374 202
- US-A- 2 078 855
- US-A- 2 903 672
- US-A- 4 693 948

## Beschreibung

Die Erfindung betrifft einen Anschlusspol für einen Akkumulator nach dem Oberbegriff des Patentanspruches 1.

Ein derartiger Anschlusspol für einen Akkumulator ist aus DE 100 03 915 A1 bekannt. Der bekannte Anschlusspol beinhaltet eine Polhülse, auf deren Außenseite lösbar ein erstes kappenförmig ausgebildetes Kontaktierungselement aufgesetzt ist. Das kappenförmige Kontaktierungselement ist mittels Schraubenverbindung mit der Polhülse verbunden, wobei eine Kopfschraube in eine Ausnehmung des durch die Polhülse ragenden Zellenanbinders eingeschraubt wird. Ein zweites Kontaktierungselement, welches mit einem elektrischen Leiter galvanisch verbunden ist, wird in Form eines Litzenkörpers um das erste Kontaktierungselement geschlungen und durch Feuerverzinnung stoffschlüssig mit dem ersten Kontaktierungselement verbunden.

Aus US 2,903,672 ist es zur Kontaktierung des Anschlusspoles eines Akkumulators bekannt, auf den Anschlusspol eine Klemmhülse mit mehreren Greifelementen aufzusetzen. Mittels einer Mutter, die auf einen an der Klemmhülse befestigten Bolzen aufgeschraubt wird, wird ein über die Klemmelemente der Klemmhülse gestülpter Kragen festgezogen und die Klemmelemente der Hülse fest mit der Außenseite des Anschlusspoles verbunden. Zwischen dem Kragen und der Mutter wird ein mit einem elektrischen Leiter galvanisch verbundenes Kontaktelement in Form einer Hülse eingelegt.

Aus US 2,078,855 ist es bekannt, auf die konische Außenfläche eines Anschlusspoles einer Batterie ein hülsenförmiges Anschlussstück mit Außengewinde aufzusetzen. Die Hülsenwand weist Längsschlitze auf, sodass beim Festziehen einer auf das Außengewinde aufgesetzten Mutter der geschlitzte Hülsenteil fest mit der Außenfläche des Anschlusspoles verbunden wird.

Bei einem aus der DE 89 12 155 U1 bekannten Anschlusspol ist in die einstückig an einen Zellenverbinder angeformte Polhülse ein Messingeinsatz mit einem Innengewinde eingesetzt. Ein elektrischer Leiter besitzt an seinem Ende eine Anschlussöse, durch deren Öffnung eine Schraube hindurchgeführt wird und in das Innengewinde des Messingeinsatzes in der Polhülse eingeschraubt wird. Zur Abdichtung sind O-Ringe zu beiden Seiten der Anschlussöse vorgesehen. Bei dem bekannten Anschlusspol ist es erforderlich die Polhülse einstückig an den Zellenanbinder bzw. Endpol anzuformen. Ferner sind zusätzliche O-Ringe zur Abdichtung erforderlich.

Ferner ist aus der DE 42 41 393 C2 ein Anschlusspol für einen Akkumulator bekannt, bei dem die Polhülse an einem Sockelteil umlaufende Rillen aufweist, die ein hackenförmiges Profil besitzen. Hierdurch erreicht man eine hohe Dichtwirkung, wodurch der Austritt von Elektrolyt und/oder Gas aus dem Akkumulatoreninnern wirkungsvoll unterbunden wird.

Aufgabe der Erfindung ist es; einen Anschlusspol der eingangs genannten Art zu schaffen, bei dem aufgrund der besonderen Ausbildung der Polhülse die erforderliche Abdichtung erreicht wird und bei dem in einfacher Weise eine gegen Lösen sichere elektrische Verbindung zwischen dem elektrischen Leiter und der Polhülse auch bei hoher Krafteinwirkung erzielt wird.

Diese Aufgabe wird erfindungsgemäß durch die Merkmale des Patentanspruches 1 gelöst.

Bei der Erfindung ist an der Polhülse ein mit dieser fest verbundenes Kontaktierungselement aus mechanisch härterem Material als die Polhülse vorgesehen. Durch das mechanisch harte Material des Kontaktierungselementes, welches elektrisch leitfähig ausgebildet ist und mit einem herkömmlichen beispielsweise als Kontaktierungshülse ausgebildeten zweiten Kontaktierungselement form- und/oder kraftschlüssig elektrisch kontaktiert werden kann, wird vermieden, dass eine Lockerung der elektrischen Verbindung stattfindet. Zur mechanischen Sicherung kann das als Kontaktierungshülse ausgebildete zweite Kontaktierungselement in herkömmlicher Weise mit Klemmsitz beispielsweise durch Festziehen einer Klemmschraube fest mit der Außenfläche des harten Kontaktierungselementes verbunden werden. Vorzugsweise ist die Außenfläche des ersten mit der Polhülse verbundenen Kontaktierungselementes mit Erhöhungen und Vertiefungen ausgestattet. Diese Erhöhungen und Vertiefungen können vorzugsweise ringförmig umlaufende Rillen oder ein Schraubengewinde sein. Zur mechanischen Sicherung der elektrischen Verbindung kann eine am elektrischen Leiter vorgesehene Kontaktierungsöse, welche das zweite Kontaktierungselement bildet, mit einem ein Innengewinde aufweisendes Sicherungselement, welches auf das erste Sicherungselement aufgeschraubt wird, an der Außenseite der Polhülse oder einer axialen Polhülsenverlängerung befestigt werden. Das als Kontaktierungshülse ausgebildete erste Kontaktierungselement kann in axialer Richtung mit einem Überstand über den oberen Rand der Polhülse bzw. Polhülsenverlängerung überstehen. Hierdurch wird vermieden, dass bei der Verbindung der vorzugsweise aus Blei bestehenden Polhülse mit dem Zellenanbinder bzw. dem Endpol beim Verschweißen oder Verlöten aufgrund der Wärmeeinwirkung Blei auf das Kunststoffgehäuse fließt bzw. tropft.

Vorzugsweise besteht das erste fest mit der Polhülse verbundene Kontaktierungselement aus einem höher schmelzenden Material als die Polhülse, so dass das Kontaktierungselement die beim Verbinden der Polhülse mit dem Zellenanbinder aufgewendete Wärmeeinwirkung ohne Schmelzen aushält.

Das erste Kontaktierungselement kann galvanisch verzinnt sein, so dass an den Berührungsflächen zwischen dem Kontaktierungselement und der Polhülse, bei Erwärmen eine feste, als Stoffschluss ausgebildete Verbindung durch eine angegossene Verbindungsschicht gebildet wird.

Der Anschlusspol kommt vorzugsweise bei Akkumulatoren, welche als Starterbatterien in Kraftfahrzeugen zum Einsatz kommen, zur Anwendung. Auch bei hohen Krafteinwirkungen, wie sie beispielsweise bei einem Crash auftreten, bleibt der elektrische Leiter fest mit der Polhülse verbunden. Es besteht nicht die Gefahr des Ablösens des elektrischen Leiters und damit verbundener Funkenbildung.

### [Beispiele]

Anhand der Figuren wird an Ausführungsbeispielen die Erfindung noch näher erläutert. Es zeigt:
- Figur 1: eine schnittbildliche Darstellung eines ersten Ausführungsbeispiels;
- Figur 2: eine schnittbildliche Darstellung entlang einer Schnittlinie A-A in Figur 1;
- Figur 3: das in den Figuren 1 und 2 dargestellte Ausführungsbeispiel mit einem angeschlossenen elektrischen Leiter in Seitenansicht;
- Figur 4: die in der Figur 3 dargestellte Anordnung in einer Ansicht von oben;
- Figur 5: ein weiteres Ausführungsbeispiel in schnittbildlicher Darstellung;'
- Figur 6: das in Figur 5 dargestellte Ausführungsbeispiel mit angeschlossenem Leiter;
- Figur 7: im Längsschnitt ein weiteres Ausführungsbeispiel; und
- Figur 8: eine vergrößerte Darstellung eines Details des Ausführungsbeispiels der Figur 7.

Bei den in den Figuren dargestellten Ausführungsbeispielen eines Anschlusspols für einen Akkumulator ist eine Polhülse 1 vorgesehen, die gas- und flüssigkeitsdicht in ein Kunststoffgehäuseteil 8, beispielsweise einen Gehäusedeckel eines Akkumulatorgehäuses eingesetzt werden kann. Zur Erzielung der erforderlichen Abdichtung sind am Sockelteil der Polhülse 1 umlaufende Vorsprünge 19 vorgesehen, welche in der Weise ausgebildet sind, wie es aus der DE 42 41 393 C2 bekannt ist. Hierdurch erreicht man einen dichten Einsatz der Polhülse, die den Austritt von Elektrolyt oder Gas aus dem Akkumulatoreninnern wirksam verhindert und zusätzlich die Gewähr dafür biete, dass in axialer Richtung der Polhülse auftretende Kräfte die Polhülse nicht aus ihrem Sitz heraus lösen.

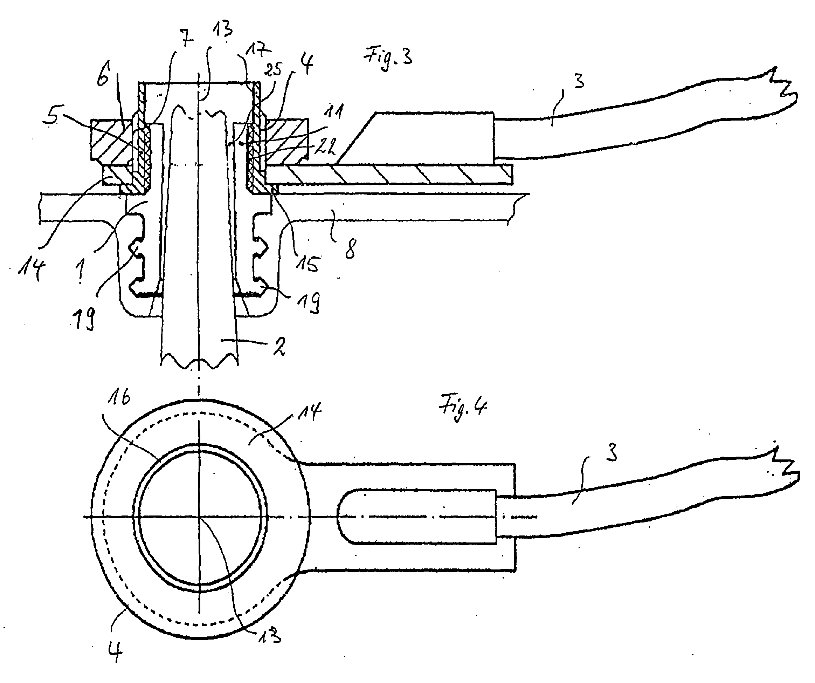

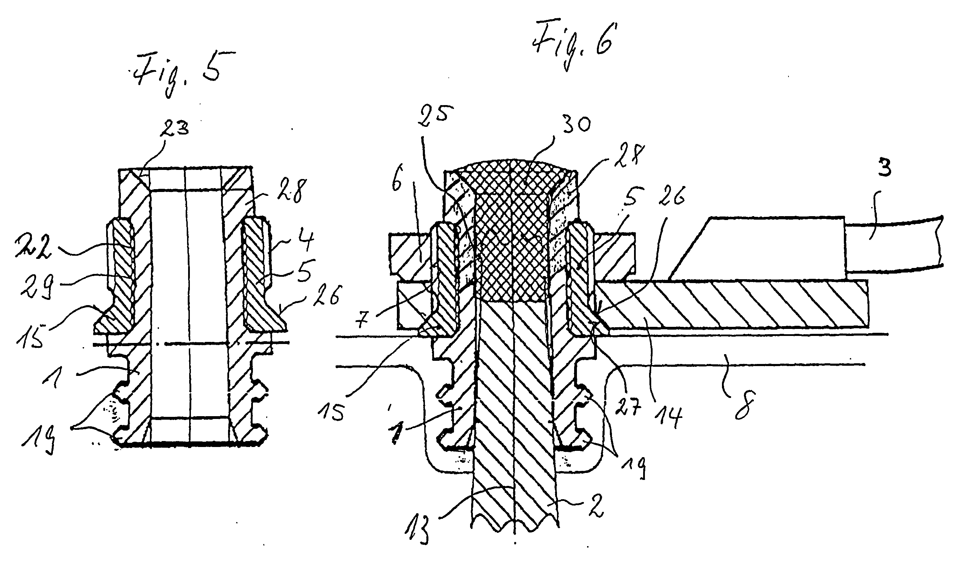

Wie aus den Figuren 3 und 5 zu ersehen ist, wird im eingebauten Zustand die Polhülse 1 mit einem Zellenanbinder 2 beispielsweise durch Löten, Schweißen oder sonst wie elektrisch verbunden. Dabei fließt in einem zwischen dem konisch verlaufenden Zellenanbinder 2 und der Innenwand der Polhülse 1 gebildeten Spalt 25 Kontaktierungsmaterial, insbesondere Blei, welches die Polhülse mit dem Zellenanbinder elektrisch kontaktiert. Dabei wird auch der von einem Überstand 17 bzw. 28 umfasste Raum ausgefüllt bzw. ausgegossen, wie es in der Figur 6 mit gekreuzter Schraffur gezeigt ist.

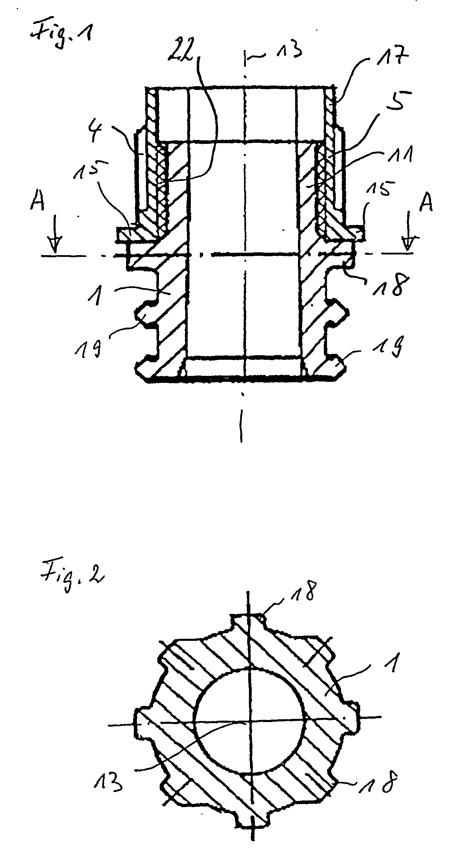

Mit der Außenseite der Polhülse 1 bzw. einer axialen Polhülsenverlängerung 11 ist bei den Ausführungsbeispielen der Figuren 1 bis 8 ein erstes Kontaktierungselement in Form einer Kontaktierungshülse 5 fest verbunden. Die Kontaktierungshülse 5 besteht aus einem härteren Material als die Polhülse 1. Es handelt sich um ein elektrisch leitfähiges Material (Metall), das vorzugsweise einen höheren Schmelzpunkt aufweist als das Material der Polhülse 1, die in bekannter Weise aus Blei bestehen kann. Messing ist ein geeignetes Metall für die Kontaktierungshülse 5. Die Kontaktierungshülse 5 ist vorzugsweise galvanisch verzinnt, so dass zur Verbindung mit der Polhülse 1 bzw. der axialen Polhülsenverlängerung 11 eine Verbindungsschicht 22 als Stoffschluss zwischen der Polhülse 1 und der Kontaktierungshülse 5 entsteht. Diese Verbindungsschicht 22 gewährleistet eine mechanisch feste Verbindung zwischen der Polhülse 1 und der Kontaktierungshülse 5. Die Verbindungsschicht 22 befindet sich zwischen der Außenseite der Polhülse 1 bzw. der Polhülsenverlängerung 11 und der Innenfläche der Kontaktierungshülse 5. Die Verbindungsschicht 22 entsteht beim Erwärmen der Polhülse 1 und der Kontaktierungshülse 5 und ergibt sich aus einer oberflächlichen Legierungsbildung zwischen dem Blei der Polhülse 1 und dem Zinn der Kontaktierungshülse 5.

Die Kontaktierungshülse 5 des Ausführungsbeispiels der Figuren 1 bis 4 besitzt den Überstand 17, der in axialer Richtung über das obere Ende der Polhülse 1 bzw. Polhülsenverlängerung 11 übersteht. Durch diesen Überstand 17 wird vermieden, dass beim Verbinden der Polhülse 1 mit dem Zellenanbinder 2, bei der Wärmeeinwirkung verflüssigtes Blei auf das Kunststoffgehäuse bzw. Kunststoffgehäuseteil 8 tropft bzw. läuft. Verflüssigtes Blei wird innerhalb des Überstandes 17 wie in einem Behälter zurückgehalten. Beim Ausführungsbeispiel der Figuren 5 und 6 ist der Überstand 28 an die Polhülse 1 angeformt.

An der Außenseite der Kontaktierungshülse 5 ist ein Außengewinde 4 vorgesehen. Auf dieses Außengewinde 4 kann, wie aus der Figur 3 zu ersehen ist, als Sicherungselement eine Sicherungsmutter 6 mit ihrem Innengewinde 7 aufgeschraubt werden. Hierdurch erreicht man eine mechanische Sicherung gegen das Lösen einer elektrischen Verbindung zwischen einem elektrischen Leiter 3 beispielsweise einem elektrischen Kabel und dem Anschlusspol. Die elektrische Verbindung wird hierbei durch eine Kontaktierungsöse 14 hergestellt, welche am Ende des elektrischen Leiters 3 vorgesehen ist. Zur elektrischen Kontaktierung wird die Kontaktierungsöse 14 über die Kontaktierungshülse 5 geschoben, so dass diese durch eine Ösenöffnung 16 der Kontaktierungsöse 14 ragt. Beim dargestellten Ausführungsbeispiel liegt die Kontaktierungsöse 14 auf einem umlaufenden Kragen 15 der an die Kontaktierüngshülse 5 angeformt ist, auf. Beim Aufschrauben der Sicherungsmutter 6 auf die Kontaktierungshülse 5 wird die Kontaktierungsöse 14 auf den umlaufenden Kragen 15 aufgedrückt, so dass eine gute elektrische Kontaktierung erreicht wird. Hierbei bildet die Kontaktierungshülse 5 ein erstes Kontaktierungselement mit dem Außengewinde 4 und die Sicherungsmutter 6 ein Sicherungselement mit dem Innengewinde 7. Dies gewährleistet eine mechanische Sicherung gegen Lösen der elektrischen Verbindung, insbesondere Lösen der Kontaktierungsöse 14, welche ein zweites Kontaktierungselement bildet, von dem Anschlusspol. Durch den umlaufenden Kragen 15 wird die Kontaktierungsöse 14 im Abstand vom Kunststoffgehäuseteil 8, insbesondere Gehäusedeckel gehalten. Dies kann auch dadurch erreicht werden, dass der in das Kunststoffgehäuseteil 8 eingebettete Sockel der Polhülse 1 über die Oberfläche des Kunststoffgehäuseteils 8 hinausragt und die Kontaktierungsöse 14 direkt auf die Polhülse 1 aufgesetzt wird.

Beim Ausführungsbeispiel der Figuren 5 und 6 besitzt der umlaufende Kragen 15 eine schräge bzw. konische Kontaktfläche 26, auf welcher eine entsprechende konische Kontaktfläche 27 in der Kontaktierungsöse 14 aufgedrückt ist.

Bei den dargestellten Ausführungsbeispielen der Figuren 1 bis 6 wird der Kragen 15 und damit die Kontaktierungshülse 5 in axialer Richtung durch radial abstehende Vorsprünge 18 (Figur 2) am Sockelteil der Polhülse 1 abgestützt.

Bei dem in den Figuren 5 und 6 dargestellten Ausführungsbeispiel ist die Kontaktierungshülse 5 in einer an der Außenseite der Polhülse 1 umlaufenden Vertiefung 29 angeordnet. Die Vertiefung 29 am Außenumfang der Polhülse 1 besitzt eine der axialen Länge der Kontaktierungshülse 5 entsprechende axiale Ausdehnung. Die Kontaktierungshülse 5 wird vorzugsweise während des Formens der Polhülse, beispielsweise durch Druckgießen am Außenumfang der Polhülse 1 befestigt. Hierzu wird die Kontaktierungshülse 5 in die Gießform, in welcher die Polhülse 1 gefertigt wird, eingelegt und das Polhülsenmaterial, insbesondere Blei, wird beim Gießen der Polhülse mit der Kontaktierungshülse 5 verbunden. Dieses Verfahren ist insbesondere bei dem in den Figuren 5, 6 und 7, 8 dargestellten Ausführungsbeispielen von Vorteil. Man erreicht hierdurch eine in axialer Richtung sichere Positionierung der Kontaktierungshülse 5 in der umlaufenden Vertiefung 29 am Außenumfang der Polhülse 1.

Die Polhülse 1 besitzt in axialer Richtung den Überstand 28, welcher gegebenenfalls eine konische Aufweitung 23 noch aufweisen kann. Beim Anschluss des Zellenanbinders 2 wird dieser in den Hohlraum der Polhülse 1 gesteckt, wie es in Figur 6 gezeigt ist. Der vom Überstand 28 umfasste Raum oberhalb des Zellenanbinders 2 sowie der Spalt 25 zwischen dem konischen Außenumfang des Zellenanbinders 2 und dem Innenumfang der Polhülse 1 werden mit einem Kontaktierungsmaterial 30, insbesondere Blei, ausgefüllt, wie es in Figur 6 gezeigt ist.

Bei den Ausführungsbeispielen der Figuren 1 bis 8 erstreckt sich die Kontaktierungshülse 5 koaxial zur Polhülsenachse 13.

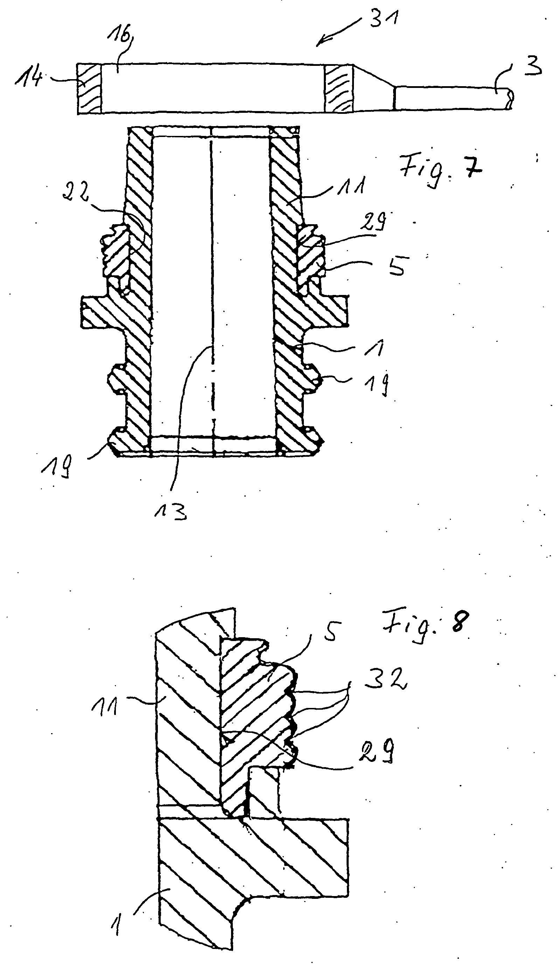

Bei dem in den Figuren 7 und 8 dargestellten Ausführungsbeispiel befindet sich an der Außenfläche der Polhülsenverlängerung 11 die Kontaktierungshülse 5. Die Kontaktierungshülse 5 besteht ebenfalls aus einem härteren Material, insbesondere Messing, als das Polhülsenmaterial, welches in herkömmlicher weise aus Blei besteht. Die Kontaktierungshülse 5 ist formschlüssig in der umlaufenden Ausnehmung bzw. Vertiefung 29 an der Außenseite der Polhülsenverlängerung 11 angeordnet. Vorzugsweise ist die Kontaktierungshülse 5 verzinnt, so dass zwischen dem Polhülsenmaterial und dem Material der Kontaktierungshülse 5 ein Stoffschluss.22 durch Lötverbindung mittels der Zinnschicht beim Erwärmen entsteht.

Die Kontaktierungshülse 5 kann ebenfalls beim Formen der Polhülse 1 und der einstückig dazugehörigen Polhülsenverlängerung 11 mit der Polhülsenverlängerung 11 fest verbunden werden. Hierzu kann der Kontaktierungsring 5 in das Formgebungswerkzeug, beispielsweise in die Gießform, in welcher die Polhülse 1 geformt wird, eingelegt werden und anschließend das geschmolzene Blei zur Formung der Polhülse 1 in die Gießform eingebracht werden. Das Material der Kontaktierungshülse 5 besteht vorzugsweise aus einem höher schmelzenden Material als das Polhülsenmaterial. Bei der Formgebung der Polhülse 1 umschließt das fließfähige Polhülsenmaterial die feste Kontaktierungshülse 5, so dass diese, wie schon erläutert, in der Ausnehmung 29 im Bereich der Polhülsenverlängerung fest eingegossen wird. Dabei entsteht auch der von der Zinnschicht gebildete Stoffschluss 22 zwischen der Polhülse 1 und der Kontaktierungshülse 5.

Wie insbesondere aus der Figur 8 zu ersehen ist, sind an der Außenfläche der Kontaktierungshülse 5 umlaufende Rillen 32 eingeformt. Die Rillen 32 sind kreisringförmig ausgebildet und konzentrisch um die Polhülsenachse 13 angeordnet. Durch diese Rillen 32 kann ein Form- und/oder Kraftschluss mit dem als Kontaktierungsöse 14 ausgebildeten Kontaktierungselement 31, welches schematisch in der Figur 7 dargestellt ist, hergestellt werden. Dieses Kontaktierungselement 31 kann mit seiner Ösenöffnung in bekannter Weise auf die Kontaktierungshülse 5 aufgesetzt werden, wobei beispielsweise durch eine Klemmschraube oder ein anderes Klemmelement ein Klemmsitz zwischen der mit den Rillen 32 versehenen Außenseite der Kontaktierungshülse 5 und der Innenseite des ringförmig ausgebildeten Kontaktierungselements 31 hergestellt wird. Das Kontaktierungselement 31, ist, wie in den Figuren 3 bis 6 gezeigt ist, galvanisch mit dem Leiter 3 verbunden.

## Patentansprüche

1. Anschlusspol für einen Akkumulator mit einer Polhülse (1), die dicht in ein Kunststoffgehäuseteil (8) eines Akkumulatorgehäuses einsetzbar ist und mit einem Zellenanbinder (2) elektrisch kontaktierbar ist, einem an der Außenseite der Polhülse (1) angeordneten und mit der Polhülse (1) fest verbundenem ersten Kontaktierungselement (5), welches hülsenförmig ausgebildet ist und aus einem mechanisch härteren Material besteht, wobei das erste Kontaktierungselement (5) an seiner Außenfläche mit einem zweiten Kontaktierungselement (31), das mit einem elektrischen Leiter (3) galvanisch verbunden ist, elektrisch kontaktierbar ist, **dadurch gekennzeichnet, dass** das erste Kontaktierungselement (5) an der Außenseite der Polhülse (1) oder einer axialen Polhülsenverlängerung (11) durch eine Verbindungsschicht (22) als Stoffschluss befestigt ist.

2. Anschlusspol nach Anspruch 1,
**dadurch gekennzeichnet, dass** die Außenfläche des ersten Kontaktierungselementes (5) derart ausgebildet ist, dass das zweite Kontaktierungselement (31) durch Kraftschluss und/oder Formschluss elektrisch mit dem ersten Kontaktierungselement (5) kontaktierbar ist.

3. Anschlusspol nach Anspruch 1 oder 2,
**dadurch gekennzeichnet, dass** an der Außenseite des ersten Kontaktierungselementes (5) umlaufende Rillen (4; 32) vorgesehen sind.

4. Anschlusspol nach Anspruch 3,
**dadurch gekennzeichnet, dass** die umlaufenden Rillen (4; 32) koaxial zur Polhülse (1) angeordnet sind.

5. Anschlusspol nach einem der Ansprüche 1 bis 4,
**dadurch gekennzeichnet, dass** am Kontaktierungselement (5) ein Außengewinde (4) vorgesehen ist.

6. Anschlusspol nach einem der Ansprüche 1 bis 5,
**dadurch gekennzeichnet, dass** das erste Kontaktierungselement (5) aus einem höher schmelzenden Material als das Material der Polhülse (1) besteht.

7. Anschlusspol nach einem der Ansprüche 1 bis 6,
**dadurch gekennzeichnet, dass** zwischen der Polhülse (1) und dem ersten Kontaktierungselement (5) eine Lötverbindung besteht.

8. Anschlusspol nach einem der Ansprüche 1 bis 7,
**dadurch gekennzeichnet, dass** das erste Kontaktierungselement (5) aus Messing besteht.

9. Anschlusspol nach einem der Ansprüche 1 bis 8,
**dadurch gekennzeichnet, dass** das erste Kontaktierungselement (5) bei der Formung der Polhülse (1) mit dieser fest verbunden ist.

10. Anschlusspol nach einem der Ansprüche 1 bis 9,
**dadurch gekennzeichnet, dass** das erste Kontaktierungselement (5) koaxial zur Polhülse (1) angeordnet ist.

11. Anschlusspol nach einem der Ansprüche 1 bis 10,
**dadurch gekennzeichnet, dass** das Kontaktierungselement (5) in axialer Richtung über den oberen Rand der Polhülse (1) oder der Polhülsenverlängerung (11) mit einem Überstand (17) übersteht.

12. Anschlusspol nach einem der Ansprüche 1 bis 11,
**dadurch gekennzeichnet, dass** das Kontaktierungselement (5) in einer am Außenumfang der Polhülse (1) umlaufenden Vertiefung (29) angeordnet ist.

13. Anschlusspol nach einem der Ansprüche 1 bis 12,
**dadurch gekennzeichnet, dass** die Polhülse (1) in axialer Richtung mit einem Überstand (28) über den im Hohlraum der Polhülse (1) angeordneten Zellenanbinder (2) übersteht.

14. Anschlusspol nach Anspruch 11 oder 13,
**dadurch gekennzeichnet, dass** ein Raum, welcher vom Überstand (17) am Kontaktierungselement (5) und/oder vom Überstand (28) an der Polhülse (1) umfasst wird, mit Kontaktierungsmaterial (30), insbesondere Blei ausgefüllt ist.

15. Anschlusspol nach einem der Ansprüche 1 bis 14,
**dadurch gekennzeichnet, dass** das zweite Kontaktierungselement (31) als eine Kontaktierungsöse (14) aus elektrisch leitendem Material vorgesehen ist, in deren Ösenöffnung (16) das erste Kontaktierungselement (5) einsetzbar ist.

16. Anschlusspol nach Anspruch 15,
**dadurch gekennzeichnet, dass** die Kontaktöse (14) auf einem umlaufenden Kragen (15) am ersten Kontaktierungselement (5) aufliegt.

## Claims

1. A connecting pole for an accumulator comprising a pole sleeve (1) which can be fitted sealingly into a plastic housing portion (8) of an accumulator housing and which can be electrically contacted with a cell connector (2), a first contacting element (5) which is arranged at the outside of the pole sleeve (1) and is fixedly connected to the pole sleeve (1) and is of a sleeve-shaped configuration and comprises a mechanically harder material, wherein the first contacting element (5) can be electrically contacted at its outside surface with a second contacting element (31) which is galvanically connected to an electrical conductor (3), **characterised in that** the first contacting element (5) is fixed to the outside of the pole sleeve (1) or an axial pole sleeve extension (11) by a connecting layer (22) as a material locking relationship.

2. A connecting pole according to claim 1 **characterised in that** the outside surface of the first contacting element (5) is designed in such a way that the second contacting element (31) can be electrically contacted with the first contacting element (5) by a force-locking engagement and/or by a positively locking engagement.

3. A connecting pole according to claim 1 or claim 2 **characterised in that** peripherally extending grooves (4; 32) are provided at the outside of the first contacting element (5).

4. A connecting pole according to claim 3 **characterised in that** the peripherally extending grooves (4; 32) are arranged coaxially with respect to the pole sleeve (1).

5. A connecting pole according to one of claims 1 to 4 **characterised**
**in that** a male screwthread (4) is provided on the contacting element (5).

6. A connecting pole according to one of claims 1 to 5 **characterised**
**in that** the first contacting element (5) comprises a material with a higher melting point than the material of the pole sleeve (1).

7. A connecting pole according to one of claims 1 to 6 **characterised**
**in that** there is a solder connection between the pole sleeve (1) and the first contacting element (5).

8. A connecting pole according to one of claims 1 to 7 **characterised**
**in that** the first contacting element (5) comprises brass.

9. A connecting pole according to one of claims 1 to 8 **characterised**
**in that** the first contacting element (5) is fixedly connected to the pole sleeve (1) in the formation thereof.

10. A connecting pole according to one of claims 1 to 9 **characterised**
**in that** the first contacting element (5) is arranged coaxially with respect to the pole sleeve (1).

11. A connecting pole according to one of claims 1 to 10 **characterised in that** the contacting element (5) projects in the axial direction beyond the upper edge of the pole sleeve (1) or the pole sleeve extension (11) by a projection portion (17).

12. A connecting pole according to one of claims 1 to 11 **characterised in that** the contacting element (5) is arranged in a recess (29) which extends around the pole sleeve (1) at the outer periphery thereof.

13. A connecting pole according to one of claims 1 to 12 **characterised in that** the pole sleeve (1) projects in the axial direction by a projection portion (28) beyond the cell connector (2) arranged in the hollow space of the pole sleeve (1).

14. A connecting pole according to claim 11 or claim 12 **characterised**
**in that** a space which is surrounded by the projection portion (17) on the contacting element (5) and/or the projection portion (28) on the pole sleeve (1) is filled with contacting material (30), in particular lead.

15. A connecting pole according to one of claims 1 to 14 **characterised in that** the second contacting element (31) is provided in the form of a contacting eye (14) of electrically conductive material, into the eye opening (16) of which the first contacting element (5) can be inserted.

16. A connecting pole according to claim 15 **characterised in that** the contact eye (14) bears on a peripherally extending collar (15) on the first contacting element (5).

## Revendications

1. Pôle de raccordement pour un accumulateur comportant un manchon de pôle (1), qui peut être introduit de manière étanche dans une partie de boîtier en matière plastique (8) d'un boîtier d'accumulateur et peut être mis en contact électrique avec un raccord de cellules (2) et un premier élément de contact (5) qui est placé sur le côté extérieur du manchon de pôle (1), est relié à demeure au manchon de pôle (1), a une forme de manchon et est fabriqué en un matériau mécaniquement assez dur, sur sa surface extérieure le premier élément de contact (5) pouvant être mis en contact avec un deuxième élément de contact (31) galvaniquement relié à un conducteur (3) électrique,
**caractérisé en ce que**, grâce à une couche de raccord (22) sous forme d'une coopération de matériau, le premier élément de contact (5) est fixé sur le côté extérieur du manchon de pôle (1) ou d'un prolongement axial du manchon de pôle.

2. Pôle de raccordement selon la revendication 1, **caractérisé en ce que** la surface extérieure du premier élément de contact (5) est conçue de telle manière que le deuxième élément de contact (31) peut être mis en contact électrique avec le premier élément de contact (5) par combinaison de force et/ou de formes.

3. Pôle de raccordement selon la revendication 1 ou 2,
**caractérisé en ce que** des cannelures périphériques (4 ; 32) sont prévues sur le côté extérieur du premier élément de contact (5).

4. Pôle de raccordement selon la revendication 3, **caractérisé en ce que** les cannelures périphériques (4 ; 32) sont coaxiales au manchon de pôle (1).

5. Pôle de raccordement selon l'une des revendications 1 à 4, **caractérisé en ce qu'**un filet extérieur (4) est prévu sur l'élément de contact (5).

6. Pôle de raccordement selon l'une des revendications 1 à 5, **caractérisé en ce que** le premier élément de contact (5) est en un matériau dont le point de fusion est plus élevé que celui du matériau du manchon de pôle (1).

7. Pôle de raccordement selon l'une des revendications 1 à 6, **caractérisé en ce qu'**il y a une liaison par brasage entre le manchon de pôle (1) et le premier élément de contact (5).

8. Pôle de raccordement selon l'une des revendications 1 à 7, **caractérisé en ce que** le premier élément de contact (5) est en laiton.

9. Pôle de raccordement selon l'une des revendications 1 à 8, **caractérisé en ce que** le premier élément de contact (5) est relié à demeure au manchon de pôle (1) lors de la formation de celui-ci.

10. Pôle de raccordement selon l'une des revendications 1 à 9, **caractérisé en ce que** le premier élément de contact (5) est coaxial au manchon de pôle (1).

11. Pôle de raccordement selon l'une des revendications 1 à 10, **caractérisé en ce que**, en direction axiale, l'élément de contact (5) fait une saillie (17) au delà du bord supérieur du manchon de pôle (1) ou du prolongement de manchon de pôle (11).

12. Pôle de raccordement selon l'une des revendications 1 à 11, **caractérisé en ce que** l'élément de contact (5) est placé dans un renfoncement (29) qui entoure le pourtour extérieur du manchon de pôle (1).

13. Pôle de raccordement selon l'une des revendications 1 à 12, **caractérisé en ce que**, en direction axiale, le manchon de pôle (1) fait une saillie (28) au delà du raccord de cellules (2) placé dans l'espace creux du manchon de pôle (1).

14. Pôle de raccordement selon la revendication 11 ou 13, **caractérisé en ce qu'**un espace, entouré par la saillie (17) sur l'élément de contact (5) et/ou par la saillie (28) sur le manchon de pôle (1), est rempli de matériau de contact (30), en particulier de plomb.

15. Pôle de raccordement selon l'une des revendications 1 à 14, **caractérisé en ce que** le deuxième élément de contact (31) prévu est un oeillet de contact (14) en un matériau électroconducteur et le premier élément de contact (5) peut être introduit dans l'ouverture de l'oeillet (16).

16. Pôle de raccordement selon la revendication 15, **caractérisé en ce que** l'oeillet de contact (14) repose sur un collet (15) périphérique du premier élément de contact (5.)
